# EUROPÄISCHE PATENTSCHRIFT

(11) **EP 1 990 899 B1**
(45) Veröffentlichungstag und Bekanntmachung des Hinweises auf die Patenterteilung: **12.07.2017**
(21) Anmeldenummer: 08405134.1
(22) Anmeldetag: 13.05.2008
(51) Int. Cl.: H02K 15/08, H02K 15/00, H02K 11/01

(54) **Vorrichtung zum Wickeln von Statoren von Elektromotoren**
Device for winding stators of electric motors
Dispositif destiné à l'enroulement de stators de moteurs électriques

(30) Priorität: 11.05.2007 EP 07405138
(43) Veröffentlichungstag der Anmeldung: 12.11.2008
(73) Patentinhaber: SMZ Wickel- und Montagetechnik AG, 5436 Würenlos (CH)
(72) Erfinder: Bolli, Thomas, 5313 Klingnau (CH); Walter, Patrice, 8173 Neerach (CH)
(74) Vertreter: Strässle, Simon

(56) Entgegenhaltungen:
- EP-A- 0 652 628
- EP-A- 1 286 452
- EP-A- 1 467 466
- US-A- 6 098 912

## Beschreibung

### Technisches Gebiet

Die Erfindung betrifft eine Vorrichtung zum automatischen Wickeln von Spulen nach dem Oberbegriff des Anspruchs 1. Im Rahmen der Erfindung liegt auch ein zum Betrieb der Vorrichtung geeignetes Verfahren.

### Stand der Technik

Elektromotoren mit Einphasen- oder Dreiphasenwicklung für Wechsel- oder Drehstrombetrieb oder regelbare Gleichstrommotoren werden heute in grossen Mengen als Antriebe in Maschinen, Geräten wie Lüfter, Kühlaggregaten, Automobilen etc. verwendet. Von ihrer Bauart wird zwischen Innenläufer- und Aussenläufermotoren unterschieden. Das Einbringen der Wicklung in den Stator eines Innenläufermotors erfolgt entweder durch das "Winding/Insert-Verfahren" oder durch direktes Einwickeln in die Statornuten.

Aus der EP-A-1 286 452 ist eine Vorrichtung zum Bewickeln von Statoren mit mehreren Spulen bekannt. Beim Umwickeln der einzelnen Polhörner wird der Draht über eine die erforderlichen Wickelbewegungen ausführende Wickelnadel direkt in die Nuten gewickelt. Die Wickelnadel ist an einer in ihrer Achsrichtung oszillierenden Wickelstange in einem Winkel von 90° zur Achsrichtung angeordnet. Eine zweite Verschiebebewegung wird vom Stator als Drehbewegung um eine Nutteilung über einen mit dem Stator gekoppelten Schaltapparat ausgeführt.

Die EP-A-1 467 466 offenbart einen Stator einer elektrischen Maschine, der eine Direktwicklung der einzelnen Feldspulen auch bei Spulenweiten von mehr als einer Nutteilung ermöglicht. Der Stator weist in bekannter Art eine Vielzahl von rotationssymmetrisch zu einer Statorachse angeordnete, radial einwärts ragende, zwischen zwei Stirnseiten des Stators verlaufende und Nuten begrenzende Polhörner auf. An jeder Stirnseite des Stators ist eine Endscheibe aus einem elektrisch isolierenden Material mit konzentrisch zur Statorachse angeordneten und von der Endscheibe axial abragenden Führungsstegen so festgelegt, dass jedem Polhorn ein Führungssteg als Leitelement für einen stirnseitig entsprechend einem vorgegebenen Wickelschritt von einer ersten Nut zu einer zweiten Nut verlaufenden Draht einer zu wickelnden Spule zugeordnet ist. Die Endscheibe dient einerseits als Isolation gegenüber dem Eisen des Stators und andererseits zur Fixierung der Wicklungsköpfe.

Üblicherweise sind an einer der beiden beidseitig an einem Statorpaket angeordneten Endscheiben Umlenkzapfen oder Rillen sowie Haken oder Stifte - so genannte Terminals - zum Befestigen der Spulenenden vorgesehen.

Eine Vorrichtung der eingangs genannten Art ist in EP-A-0 652 628 offenbart.

### Darstellung der Erfindung

Der Erfindung liegt die Aufgabe zugrunde, eine Vorrichtung der eingangs genannten Art zu schaffen, die neben der Wicklung der Spulen auch eine Befestigung der Spulenenden an Terminals an einer Endscheibe ermöglicht.

Zur erfindungsgemässen Lösung der Aufgabe führt eine Vorrichtung mit den Merkmalen des Anspruchs 1.

Kern der Erfindung ist die Wickelstange mit der wenigstens um 90°, vorzugsweise um etwa 100°, zwischen der ersten Achsrichtung und der zweiten Achsrichtung schwenkbaren Wickelnadel, die es ermöglicht, in der horizontalen 90°-Position die Drähte in die Nuten zu wickeln und in der vertikalen 0°-Position den Drahtanfang bzw. das Drahtende direkt an stirnseitig angeordneten Terminals zu befestigen

Zur Ausführung ihrer Schwenkbewegung ist die Wickelnadel mit einer an der Wickelstange in ihrer Längsrichtung über einen programmgesteuert stufenlos einstellbaren Spindelantrieb verschiebbaren Steuerstange verbunden. Bevorzugt ist die Steuerstange in bekannter Art mit einem programmgesteuert stufenlos einstellbaren Servomotor mit Gewindespindel verbunden. Die Steuerstange kann im Innern der Wickelstange und koaxial zu dieser angeordnet sein. Die Wickelnadel ist mit der Steuerstange über ein Hebelgelenk verbunden.

Der Schaltapparat ist während des Wickelvorganges mit einer Spannvorrichtung für den zu wickelnden Stator verbunden.

Der Wickelnadel ist bevorzugt eine in der ersten und zweiten Achsrichtung verschiebbare und radial um die dritte Achsrichtung drehbare Drahtklemm- und Schneidevorrichtung zugeordnet.

Zum gleichzeitigen Wickeln von Spulen mehrerer Statoren sind mehrere Wickelstangen mit je einer Wickelnadel angeordnet und synchron verschiebbar.

Aus wirtschaftlichen Gründen umfasst die Wickelmaschine bevorzugt zwei bis maximal sechs Wickelstationen.

Die Wickelmaschine umfasst die folgenden programmierbaren Einheiten:
- Vertikale Antriebseinheit für die Wickelstange: NC-Achse und Gewindespindel
- Radiale Verschiebeeinheit für die Wickelstange: NC-Achse und Gewindespindel
- Wickelstange mit schwenkbarer Wickelnadel: NC-Achse und Kipphebel
- Drahtklemm- und Schneidevorrichtung in z-Richtung verschiebbar: NC-Achse und Welle/Umlenkgetriebe
- Drahtklemm- und Schneidevorrichtung in x-Richtung verschiebbar: pneumatisch oder motorisch
- Drahtklemm- und Schneidevorrichtung radial um y-Achse drehbar: pneumatisch oder motorisch
- Schaltantrieb: NC-Achse

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf einen Stator mit Endscheiben;
- Fig. 2: eine Seitenansicht einer Wickelstation einer Anlage zum Wickeln von Statoren;
- Fig. 3: eine Seitenansicht einer kompletten Wickelstange;
- Fig. 4 bis 6: die Seitenansicht des freien Endes der Wickelstange mit drei unterschiedlichen Winkelstellungen der Wickelnadel;
- Fig. 7: die Sicht auf die Rückseite der Wickelstange von Fig. 4;
- Fig. 8: eine Schrägsicht auf die Wickelstange von Fig. 3;
- Fig. 9: die Seitenansicht eines Details von Fig. 8;
- Fig. 10: eine Sicht schräg von unten auf die gegenseitige Anordnung der Wickelnadel und der Drahtklemm- und Schneidevorrichtung in einer Wickelstation;
- Fig. 11: einen Längsschnitt durch die Wickelstange von Fig. 3 mit Antriebseinheit für die Schwenkbewegung der Wickelnadel;

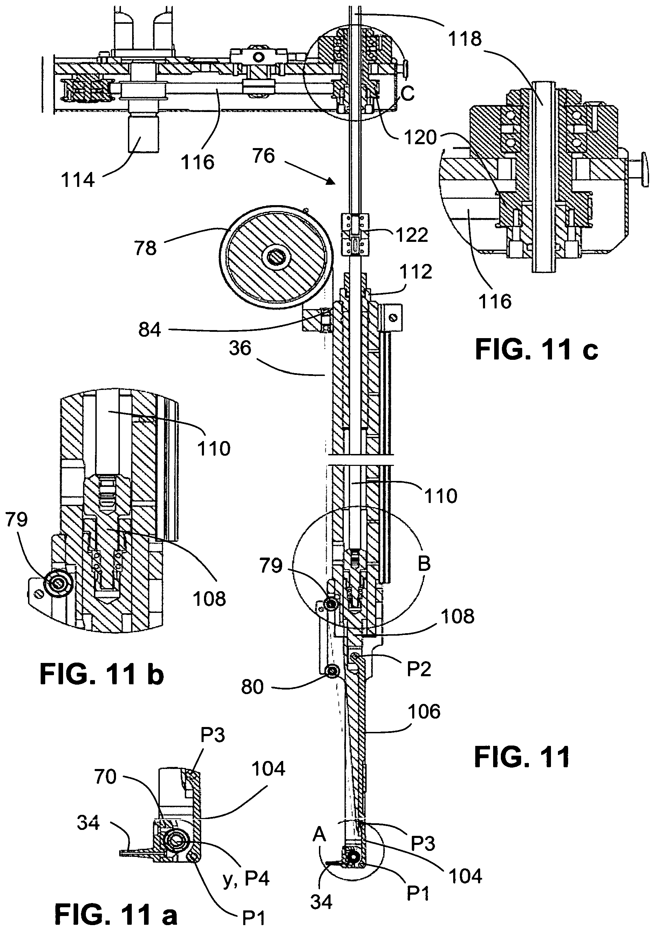

- Fig. 11 a-c: vergrösserte Details von Fig. 11 gemäss den Ausschnitten A-C;

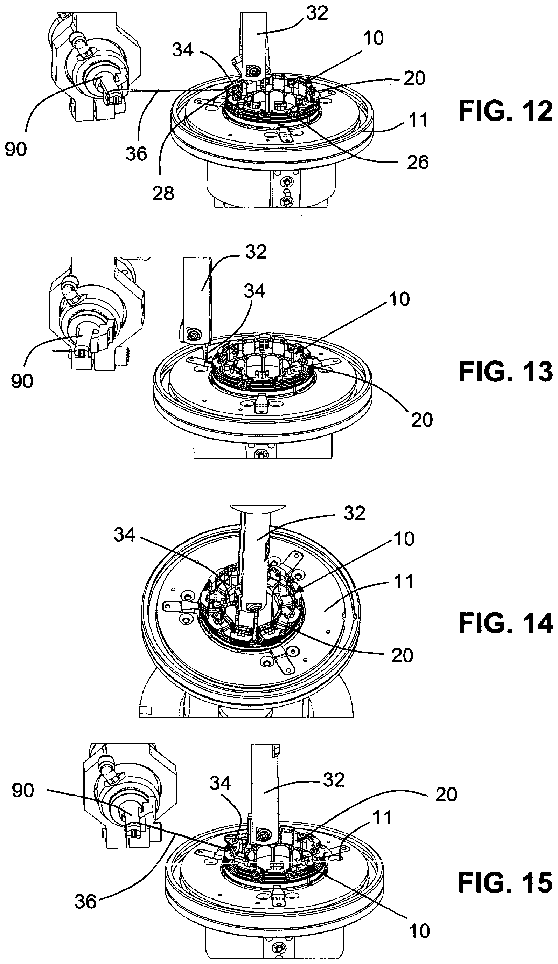

- Fig. 12 - 15: den Funktionsablauf beim Wickeln der Statorspulen und Befestigen der Spulenenden an Terminals.

### Beschreibung von Ausführungsbeispielen

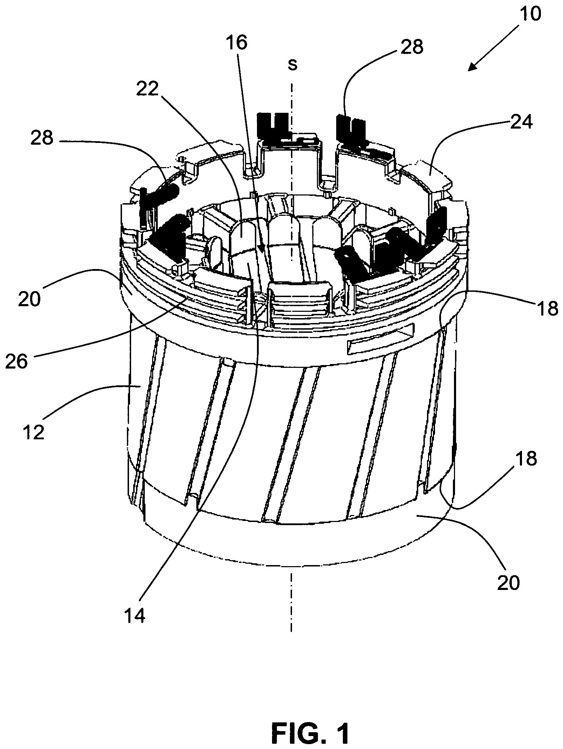

Ein in Fig. 1 gezeigter Stator 10 besteht im Wesentlichen aus einem ringförmigen Blechpaket 12 mit von diesem radial nach innen abragenden Polhörnern 14, die durch Zwischenräume in Form von Nuten 16 voneinander getrennt angeordnet sind. Der beispielhaft dargestellte Stator 10 ist Teil eines Innenläufer-Motors. Der Stator 10 wird durch Schichten von identischen Blechlamellen zu einem Blechpaket hergestellt.

An jeder Stirnseite 18 des Stators 10 ist eine ringförmige Endscheibe 20 aus einem elektrisch isolierenden Kunststoffmaterial angeordnet. Jede Endscheibe 20 weist eine der Anzahl Polhörner 14 entsprechende Anzahl Endstücke 22 auf. Die Endscheiben 20 werden positionsgenau so aufgepresst, dass jedes Polhorn 14 in seiner axialen Verlängerung in ein den stirnseitigen Abschluss des Polhorns bildendes Endstück 22 übergeht. Die in die Nuten gewickelten Spulen laufen stirnseitig über die Endstücke 22.

Am Umfang der zur Befestigung der Drahtenden vorgesehenen Endscheibe 20 ragen konzentrisch zur Statorachse s angeordnete Führungsstege 24 mit an deren Aussenumfang angeordneten Rillen 26 zum Einlegen und Führen der zwischen den Führungsstegen 24 von den Nuten 16 herausgeführten Spulenenden zu entsprechenden Terminals 28.

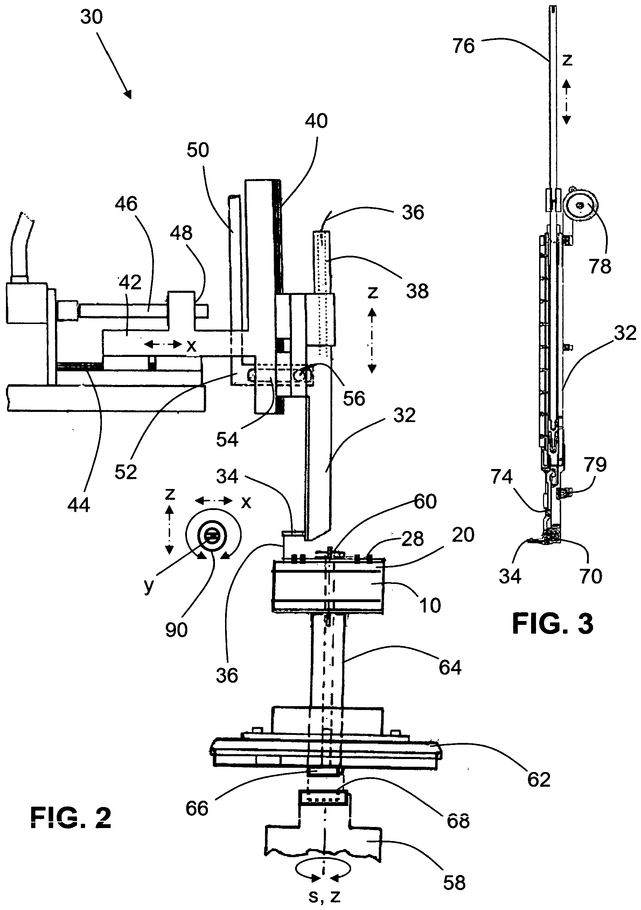

Bei einer in Fig. 2 gezeigten Wickelstation 30 ist eine Wickelstange 32 für eine Drahtführerdüse oder Wickelnadel 34 in einer senkrecht angeordneten, parallel zur Rotationsachse s des Stators 10 liegenden ersten Führungsschiene 40 in vertikaler Achsrichtung z gleitend verschiebbar gelagert. Die Wickelnadel 34 befindet sich am unteren freien Ende der in diesem Beispiel eine Bohrung 38 zur Drahtführung aufweisenden Wickelstange 32. Draht 36 wird über die Bohrung 38 der Wickelnadel 34 zugeführt.

Die erste Führungsschiene 40 ist Teil eines Verstellblockes 42, welcher auf einer zweiten ortsfesten Führungsschiene 44 in einer horizontalen Verschiebungsachse x in Richtung auf die der Rotationsachse s des Stators entsprechende vertikale Achse z verschiebbar ist. Der Verstellblock 42 ist über eine in einem Gewinde 48 im Verstellblock 42 gelagerte Gewindespindel 46 auf der zweiten Führungsschiene 44 verschiebbar. Die Gewindespindel 46 ist mit einem in der Zeichnung nicht dargestellten Antriebsmotor verbunden.

In einem in der Zeichnung aus Gründen der Übersichtlichkeit nicht dargestellten Lagerblock ist eine in der vertikalen Achse z verschiebbare Hubstange 50 gelagert. Zur Ausführung von Hubbewegungen in der Achsrichtung z ist die Hubstange 50 an ihrem oberen Ende als Gewindespindel ausgebildet, die mit einem mit einem in der Zeichnung nicht dargestellten Antriebsmotor zur Ausführung der Hubbewegungen der Hubstange 50 verbunden ist.

Am unteren Ende der Hubstange 50 ist ein horizontal abragendes Halterungsteil 52 mit einem ebenfalls in horizontaler Achsrichtung x verlaufenden Langloch 54 angeordnet. Das Langloch 54 dient der Aufnahme eines seitlich an der Wickelstange 32 angebrachten Führungsbolzens 56.

Ein Schaltapparat 58 dient der Ausführung einer Drehbewegung des Stators 10 um seine Achse s. Während des Wickelvorganges ist der Stator 10 in einer Spannvorrichtung 60 fixiert. Eine in einer Transportpalette 62 drehbar gelagerte Welle 64 ist mit der Spannvorrichtung 60 starr verbunden. Am freien Ende der Welle 64 ist ein Mitnehmer 66 angeordnet, eine entsprechende Aufnahme 68 ist Teil des Schaltapparates 58. In der Wickelposition steht der Mitnehmer 66 mit der Aufnahme 68 in Eingriff und stellt damit die Verbindung mit dem Schaltapparat 58 her. Die Transportpalette 62 wird über einen aus Gründen der Übersichtlichkeit in der Zeichnung nicht dargestellten Palettenförderer mittels Transportbändern zur Wickelstation hin und von dieser auch wieder weg geführt.

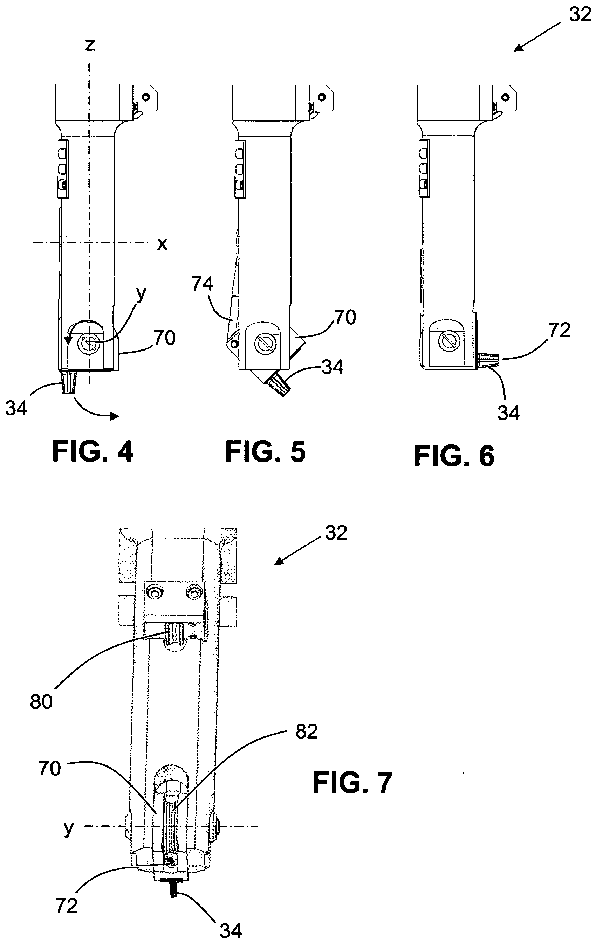

Wie in den Fig. 4 bis 7 dargestellt, ist die mit einer Düsenöffnung 72 zur Drahtführung versehene Wickelnadel 34 an einem am freien Ende der in den Fig. 3, 8 und 9 gezeigten Wickelstange 32 um eine horizontale Drehachse y in einer durch die Vertikalachse z und die horizontale Verschiebungsachse x definierten Ebene schwenkbar gelagerten Wickelnadelhalter 70 angeordnet, wobei die Wickelnadel 34 ebenfalls in der durch die Vertikalachse z und die horizontale Verschiebungsachse x definierten Ebene liegt. Zur Ausführung einer Schwenkbewegung der Wickelnadel 34 ist am Wickelnadelhalter 70 ein mit einer innerhalb der Wickelstange 32 und koaxial zu dieser angeordneten Steuerstange 76 gelenkig verbundenes Hebelsystem 74 angelenkt. Über eine entsprechende Längsverschiebung der Steuerstange 76 in der Vertikalachse z kann der Winkel der Wickelnadel 34 gegenüber der Vertikalachse z eingestellt werden.

Die Drahtführung zur Wickelnadel 34 erfolgt über eine an der Wickelstange 32 festgelegte grosse Drahtumlenkrolle 78, durch Keramikdüsen 84 und über zwei kleine Umlenkrollen 79, 80 zu einer mit dem Wickelnadelhalter 70 verbundenen Drahteinlaufrolle 82 und von dieser in die Düsenöffnung 72 der Wickelnadel 34.

In Fig. 11 und den Fig. 11 a-c ist der Aufbau der Wickelstange 32 und der Antrieb für die Schwenkbewegung der Wickelnadel 34 detailliert gezeigt. Das Hebelsystem 74 zur Ausführung der Schwenkbewegung der Wickelnadel 34 besteht aus zwei Hebeln 104, 106, wobei ein erster Hebel 104 unter Bildung eines ersten Drehpunktes P1 am Wickelnadelhalter 70 und der zweite Hebel 106 unter Bildung eines zweiten Drehpunktes P2 an einem im Inneren der Wickelstange 32 in Vertikalrichtung z gleitend verschiebbaren Gleitstück 108 angelenkt ist. Die beiden Hebel 104, 106 sind untereinander unter Bildung eines dritten Drehpunktes P3 gelenkig verbunden. Die horizontale Drehachse y der drehbar gelagerten Wickelnadel 32 bildet einen vierten Drehpunkt P4 des Hebelsystems 34. Eine gesteuerte Längsbewegung des Gleitstücks 108 in Vertikalrichtung z führt über das Hebelsystem 34 zu einer entsprechend gesteuerten Schwenkbewegung der Wickelnadel 32 um 90 bis 100°. Die gesteuerte Längsbewegung des Gleitstücks 108 erfolgt über eine Kugelumlaufspindel 110, die mit einem ihrer Enden im Gleitstück 108 drehbar gelagert und mit dem anderen, oberen Ende in einer Kugelmutter 112 fixiert ist. Zur Ausführung einer Drehbewegung der Kugelumlaufspindel 110 dient ein programmierbarer Antrieb 114, der über einen Zahnriemen 116 ein auf einer Polygonwelle 118 sitzendes Polygonritzel 120 antreibt. Die Kugelumlaufspindel 110 und die Polygonwelle 118 sind über eine Kupplung 122 verbunden und bilden zusammen die Steuerstange 76.

Zum Einlegen von Draht in die Nuten 16 des Stators 10 wird die Wickelnadel 34 auf einen Winkel von 90° zur Vertikalachse z eingestellt. In dieser Winkelstellung weist die Wickelnadel 34 in die horizontale Verschiebungsrichtung x. Nach Beendigung des Wickelvorganges wird der Winkel der Wickelnadel 34 zur Umwicklung der Terminals 28 zwischen 45° und etwa -10° zur Vertikalachse z eingestellt. Der Funktionsablauf beim Wickeln der Statorspulen und Befestigen der Spulenenden an Terminals ist weiter unten anhand der Fig. 12 -15 näher erläutert

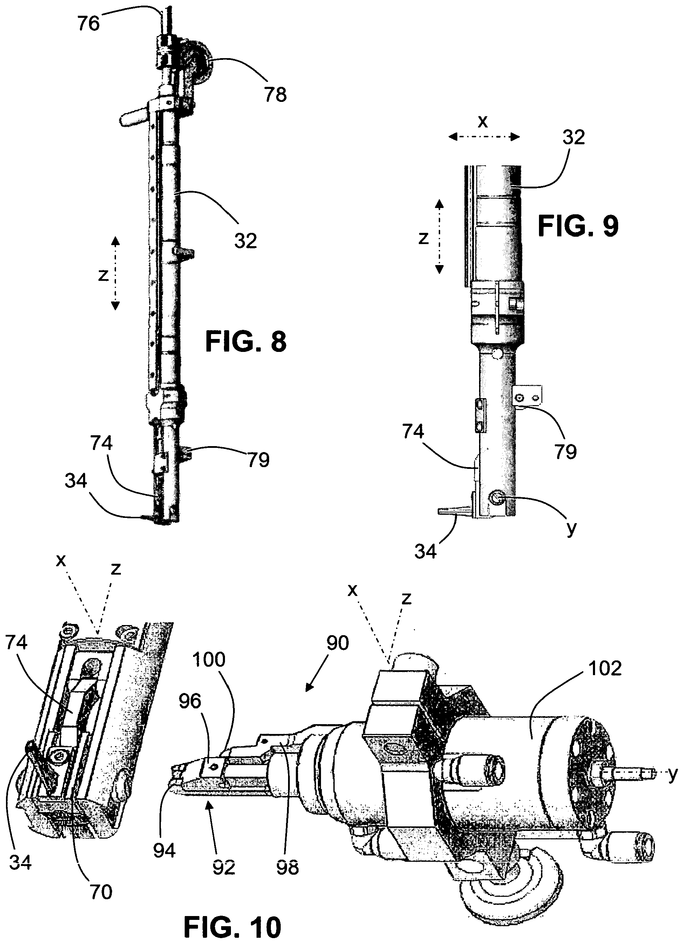

Eine in Fig. 2 angedeutete und in Fig. 10 näher dargestellte Drahtklemm- und Schneidevorrichtung 90 dient dem Fixieren des Drahtanfangs und des Drahtendes und dem Abschneiden des Drahtes am Terminal.

Die Drahtklemm- und Schneidevorrichtung 90 ist wie die Wickelstange 32 in Vertikalrichtung z und in Horizontalrichtung x verschiebbar. Zusätzlich zu diesen Linearverschiebungen ist die Drahtklemm- und Schneidevorrichtung 90 radial um eine senkrecht zur Vertikalrichtung z und Horizontalrichtung x liegende, horizontal angeordnete y-Achse drehbar. Die programmgesteuerten Bewegungsmöglichkeiten der Wickelstange 32 und der Drahtklemm- und Schneidevorrichtung 90 in den drei Achsrichtungen x, y und z ergeben sich aus der Betrachtung der Fig. 2 und 10.

Ein in Richtung der horizontalen y-Achse liegendes Drahtklemmteil 92 weist ein querschnittlich hakenförmiges Greifteil 94 zum Greifen des Drahtes und ein in Richtung der y-Achse auf des Greifteil 94 zu und von diesem weg bewegbares Klemmstück 96 zum Festklemmen des Drahtes zwischen Greifteil 94 und Klemmstück 96 bzw. zum Lösen der Klemmverbindung auf. Die Bewegung des Klemmstücks 96 zwischen den beiden Endanschlägen Klemmposition und Offenstellung erfolgt über eine pneumatische Steuerung.

Ein seitlich am Klemmstück 96 in Richtung der y-Achse verschiebbares Drahtschneideteil 98 ist an seinem freien Ende mit einer Schneide 100 versehen. Die das Schneiden des zwischen Greifteil 94 und Klemmstück 96 festgeklemmtem Drahtes bewirkende Bewegung des Drahtschneideteils 98 von einer rückwärtigen Position in die Schneidposition und umgekehrt erfolgt ebenfalls über eine pneumatische Steuerung.

Die Drehbewegung des Drahtklemmteils 92 und des Drahtschneideteils 98 um die y-Achse erfolgt über einen motorischen Antrieb 102.

Nachfolgend wird der Funktionsablauf für das Wickeln und Anlegen der Drahtenden an Terminals anhand der Fig. 12 bis 15 beschrieben.

Die Statorpakete werden in die vertikal angeordneten Aufnahmen / Spannvorrichtungen eingelegt u. am Aussendurchmesser fixiert. Wie oben erwähnt besteht die Aufnahme aus einer in einer Transportpalette drehbar gelagerten Welle, welche am unteren Ende einen Mitnehmer aufweist. Dieser kommt beim Einfahren der Palette in die Wickelposition mit dem Schaltantrieb in Eingriff. Die Positionierung des Statoren zur Wickelnadel erfolgt über die Statoraufnahme und die programmierbare NC-Achse. Der programmierbare Antrieb übernimmt ferner die Drehbewegung der Statoren während des Wickelnsvorganges (Wickelschritt), das Weiterschalten zur nächsten Spule nach beendeter Wicklung und das Drehen des Stators in Anlegeposition der Terminals.

Bei Wicklungsbeginn ist der Drahtanfang in der Klemmvorrichtung 90 fixiert (Fig. 12). Es folgen die Schritte:
- Stator dreht in Anlegeposition.
- Wickelnadel 34 schwenkt in 0°-Position, d.h. parallel zur Vertikalachse z (Fig. 13).
- Draht 36 wird durch Drehung des Stators 10 in eine Rille 26 der Endscheibe 20 verlegt und am vorgesehen Terminal 28 befestigt. Das Befestigen des Drahtes 36 ist eine Kombination aus der Bewegung von 2-3 Achsen.
- Draht 36 wird am Terminal 28 abgeschnitten (nicht dargestellt).
- Wickelnadel schwenkt in 90°-Position, Wickelstange (32) fährt zurück ins Statorzentrum (Fig. 14).
- Spulen werden gewickelt, d.h. die Wickelstange 32 mit rechwinklig abragender Wickelnadel 34 bewegt sich durch die Nut des Statorpaketes, schwenkt am Kopfende um den Winkel der Spulenweite und bewegt sich in Gegenrichtung zum anderen Paketende. Dieser Ablauf wiederholt sich entsprechend den Wickeldaten.

Bei Wicklungsende folgen die Schritte:
- Wickelnadel 34 stoppt in der oberen Position, d.h. auf der Seite mit den Terminals 28.
- Wickelstange 32 fährt radial nach aussen zur Anlegeposition am Terminal 28.
- Draht 36 wird durch Drehung des Stators 10 in eine Rille 26 der Endscheibe 20 verlegt und am vorgesehen Terminal 28 befestigt (Fig. 15). Das Befestigen des Drahtes ist eine Kombination aus der Bewegung von 2-3 Achsen.
- Draht wird von der Klemmeinheit erfasst, geklemmt und am Terminal 28 abgeschnitten.
- Der fertige Stator fährt aus der Wickelstation - ein neuer Zyklus beginnt mit der Ausgangsposition der Wickelnadel 32 gemäss Fig. 12.

Die schwenkbare Wickelnadel hat folgende Vorteile:
- Wickelnadel ist in beliebigem Winkel zwischen -10° und + 90° programmgesteuert stufenlos auf jeden beliebigen Winkel schwenkbar.
- Das Schwenken der Wickelnadel im Bereich der Endscheibe ermöglicht eine exakte Drahtverlegung in entsprechende Rillen (Phasentrennung) oder andere Umlenkpunkte.
- Automatische Fixierung der Spulenenden an Terminals, welche am Umfang der Endscheibe beliebig platziert sein können.
- Flexible Anordnung der Drahtklemm- und Schneidevorrichtung für das Anlegen der Drahtenden bei unterschiedlichen Ausführungen der Endscheibe.
- Nach dem Wickeln sind keine weiteren Handarbeiten am Stator erforderlich.

### Bezugszeichenliste

- 10: Stator
- 11: Statoraufnahme
- 12: ringförmiges Blechpaket
- 14: Polhorn
- 16: Nuten
- 18: Stirnseite von 20
- 20: Endscheibe
- 22: Endstücke
- 24: Führungssteg
- 26: Rillen
- 28: Terminals
- 30: Wickelstation
- 32: Wickelstange
- 34: Wickelnadel
- 36: Draht
- 38: Bohrung
- 40: erste Führungsschiene
- 42: Verstellblock
- 44: zweite Führungsschiene
- 46: Gewindespindel
- 48: Gewinde
- 50: Hubstange
- 52: Halterungsteil
- 54: Langloch
- 56: Führungsbolzen
- 58: Schaltapparat
- 60: Spannvorrichtung
- 62: Transportpalette
- 64: Welle
- 66: Mitnehmer
- 68: Aufnahme für 66
- 70: Wickelnadelhalter
- 72: Düsenöffnung
- 74: Hebelsystem
- 76: Steuerstange
- 78: grosse Drahtumlenkrolle
- 79, 80: kleine Drahtumlenkrollen
- 82: Drahteinlaufrolle
- 84: Keramikdüse
- 90: Drahtklemm- und Schneidevorrichtung
- 92: Drahtklemmteil
- 94: hakenförmiges Greifteil
- 96: Klemmstück
- 98: Drahtschneideteil
- 100: Schneide
- 102: motorischer Antrieb
- 104: erster Hebel
- 106: zweiter Hebel
- 108: Gleitstück
- 110: Kugelumlaufspindel
- 112: Kugelmutter
- 114: Antrieb
- 116: Zahnriemen
- 118: Polygonwelle
- 120: Polygonritzel
- 122: Kupplung
- s: Statorachse
- z: Vertikalachse
- x: horizontale Verschiebungsachse
- y: horizontale Drehachse
- P1-P4: Drehpunkte

## Patentansprüche

1. Vorrichtung zum automatischen Wickeln von Spulen in Nuten (16) eines Stators (10) einer elektrischen Maschine und Befestigen von Spulenenden an stirnseitigen Terminals (28), mit einer in einer ersten Achsrichtung (z) axial und in einer zweiten Achsrichtung (x) rechtwinklig zur ersten Achsrichtung (z) verschiebbaren Wickelstange (32), einer von einem freien Ende der Wickelstange (32) in einer durch die erste und die zweite Achsrichtung (z, x) definierten Ebene abragenden Wickelnadel (34) und einem zur Ausführung einer Drehbewegung um eine in der ersten Achsrichtung (z) liegende Drehachse mit einem zu bewickelnden Stator (10) verbindbaren Schaltapparat (58), wobei die Wickelnadel (34) an der Wickelstange (32) um eine rechtwinklig zur ersten und zweiten Achsrichtung (z, x) stehende dritte Achsrichtung (y) programmgesteuert stufenlos auf jede beliebige Winkelposition innerhalb eines vorgegebenen maximalen Schwenkbereichs schwenkbar angeordnet ist
**dadurch gekennzeichnet, dass**
dass die Wickelnadel (34) zur Ausführung ihrer Schwenkbewegung mit einer an der Wickelstange (32) in ihrer Längsrichtung (z) über einen programmgesteuert stufenlos einstellbaren Spindelantrieb verschiebbaren Steuerstange (76) verbunden ist.

2. Vorrichtung nach Anspruch 1, **dadurch gekennzeichnet, dass** die Wickelnadel (34) wenigstens um 90° zwischen der ersten Achsrichtung (z) und der zweiten Achsrichtung (x) schwenkbar ist.

3. Vorrichtung nach Anspruch 1 oder 2, **dadurch gekennzeichnet, dass** Steuerstange (76) mit einem programmgesteuert stufenlos einstellbaren Servomotor mit einer Gewindespindel verbunden ist.

4. Vorrichtung nach einem der Ansprüche 1 bis 3, **dadurch gekennzeichnet, dass** die Steuerstange (76) im Innern der Wickelstange (32) und koaxial zu dieser in der Längsachse (z) verschiebbar gelagert ist.

5. Vorrichtung nach einem der Ansprüche 1 bis 4, **dadurch gekennzeichnet, dass** die Wickelnadel (34) mit der Steuerstange (76) über ein Hebelgelenk (74) verbunden ist.

6. Vorrichtung nach Anspruch 5, **dadurch gekennzeichnet, dass** die Steuerstange (76) von einer über eine Kupplung (122) mit einer Polygonwelle (118) verbundenen Kugelumlaufspindel (110) gebildet ist, wobei zur Ausführung einer Drehbewegung der Kugelumlaufspindel (110) ein auf der Polygonwelle (118) sitzendes Polygonritzel (120) mittels eines programmierbaren Antriebs (114) über einen Zahnriemen (116) antreibbar ist.

7. Vorrichtung nach einem der Ansprüche 1 bis 6, **dadurch gekennzeichnet, dass** der Schaltapparat (58) während des Wickelvorganges mit einer Spannvorrichtung (60) für den zu wickelnden Stator (10) verbunden ist.

8. Vorrichtung nach einem der Ansprüche 1 bis 7, **dadurch gekennzeichnet, dass** der Wickelnadel (34) eine in der ersten und zweiten Achsrichtung (x, z) verschiebbare und radial um die dritte Achsrichtung (y) drehbare Drahtklemm- und Schneidevorrichtung (90) zugeordnet ist.

9. Vorrichtung nach einem der Ansprüche 1 bis 8, **dadurch gekennzeichnet, dass** zum gleichzeitigen Wickeln von Spulen mehrerer Statoren (10) mehrere Wickelstangen (32) mit je einer Wickelnadel (34) angeordnet und synchron verschiebbar sind.

10. Verfahren zum automatischen Wickeln von Spulen in Nuten (16) eines Stators (10) einer elektrischen Maschine und Befestigen von Spulenenden an stirnseitigen Terminals (28) mit einer Vorrichtung zum automatischen Wickeln von Spulen in Nuten (16) eines Stators (10) einer elektrischen Maschine und Befestigen von Spulenenden an stirnseitigen Terminals (28), mit einer in einer ersten Achsrichtung (z) axial und in einer zweiten Achsrichtung (x) rechtwinklig zur ersten Achsrichtung (z) verschiebbaren Wickelstange (32), einer von einem freien Ende der Wickelstange (32) in einer durch die erste und die zweite Achsrichtung (z, x) definierten Ebene abragenden Wickel-nadel (32) und einem zur Ausführung einer Drehbewegung um eine in der ersten Achsrichtung (z) liegende Drehachse mit einem zu bewickelnden Stator (10) verbindbaren Schaltapparat (58), wobei die Wickelnadel (34) an der Wickelstange (32) um eine rechtwinklig zur ersten und zweiten Achsrichtung (z, x) stehende dritte Achsrichtung (y) programmgesteuert stufenlos auf jede beliebige Winkelposition innerhalb eines vorgegebenen maximalen Schwenkbereichs schwenkbar angeordnet ist,
wobei der Wickelnadel (34) eine in der ersten und zweiten Achsrichtung (z, x) verschiebbare und radial um die dritte Achsrichtung (y) drehbare Drahtklemm- und Schneidvorrichtung (90) zugeordnet ist, wobei das Verfahren **dadurch gekennzeichnet ist, dass** ein Anfang eines Drahtes (36) in der Drahtklemm- und Schneidvorrichtung (90) fixiert, der Stator (10) in eine Anlegeposition gedreht, die Wickelnadel (34) in eine solche Winkelposition schwenkt, dass durch Drehen des Stators (10) der Draht (36) in eine Rille (26) der Endscheibe (20) verlegt und am vorgesehenen Terminal (28) befestigt wird, die Wickelnadel (34) in die Wickelposition geschwenkt und die Wickelstange (32) ins Zentrum des Stators (10) gefahren wird und die Spulen des Stators (10) gewickelt werden, die Wickelnadel (32) nach erfolgter Wicklung der Spulen des Stators (10) radial nach aussen zur Anlegeposition an einem Terminal (28) gefahren, durch Drehen des Stators (10) der Draht (36) in eine Rille (26) der Endscheibe (20) verlegt und am vorgesehenen Terminal (28) befestigt wird, und der Draht (36) von der Drahtklemm- und Schneidvorrichtung (90) erfasst, geklemmt und am Terminal (28) abgeschnitten wird.

## Claims

1. A device for automatically winding coils into grooves (16) of a stator (10) of an electrical machine and fixing coil ends at front-end terminals (28), having a winding rod (32) that can be displaced in a first axial direction (z) and a second axial direction (x) at right angles to the first axial direction (z), a winding needle (34) projecting from a free end of the winding rod (32) in a plane defined by the first and the second axial direction (z, x) and a switching apparatus (58) which can be connected to a stator (10) to be wound in order to perform a rotary movement about a rotational axis located in the first axial direction (z), the winding needle (34) being fixed on the winding rod (32) so as to be swiveling, in a program-controlled continuous manner at any arbitrary angular position within a predetermined maximum pivoting range, about a third axial direction (y) at right angles to the first and second axial direction (z, x)
**characterized in that**
the winding needle (34) is connected, for performing the swiveling movement, to a control rod (76) that is displaceable on the winding rod (32) in its longitudinal direction (z) via a program-controlled, continuously adjustable spindle drive.

2. The device according to claim 1, **characterized in that** the winding needle (34) may be swiveled by at least by 90° between the first axial direction (z) and the second axial direction (x).

3. The device according to claim 1 or 2, **characterized in that** control rod (76) is connected through a servo-motor, which can be adjusted in a program-controlled continuous manner, to a threaded spindle.

4. The device according to any one of claims 1 to 3, **characterized in that** the control rod (76) is arranged, in a displaceable manner, in the interior of the winding rod (32) and coaxially with the latter in the longitudinal axis (z).

5. The device according to any one of claims 1 to 4, **characterized in that** the winding needle (34) is connected to the control rod (76) via a lever joint (74).

6. The device according to claim 5, **characterized in that** the control rod (76) is formed by a ball circulating spindle (110) connected to a polygonal shaft (118) via a clutch (122), wherein, for executing the rotating movement of the ball circulating spindle (110), a polygon pinion (120) seated on the polygonal shaft (118) may be driven by means of a programmable drive (114) via a toothed belt (116).

7. The device according to any one of claims 1 to 6, **characterized in that** the switching apparatus (58) is connected, during the winding process, to a clamping device (60) for the stator (10) to be wound.

8. The device according to any one of claims 1 to 7, **characterized in that** the winding needle (34) has a corresponding wire clamping and cutting device (90) which is displaceable in the first and second axial directions (x, z) and rotatable radially about the third axial direction (y).

9. The device according to any one of claims 1 to 8, **characterized in that** several winding rods (32) with a winding needle (34) each are arranged and can be synchronously displaced for the simultaneous winding of coils of several stators (10).

10. A method for automatically winding coils into grooves (16) of a stator (10) of an electrical machine and attaching coil ends at front-end terminals (28) with a device for automatically winding coils into grooves (16) of a stator (10) of an electrical machine and fixing coil ends at front-end terminals (28), having a winding rod (32) that can be displaced in a first axial direction (z) and a second axial direction (x) at right angles to the first axial direction (z), a winding needle (34) projecting from a free end of the winding rod (32) in a plane defined by the first and the second axial directions (z, x) and a switching apparatus (58) which can be connected to a stator (10) to be wound in order to perform a rotary movement about a rotational axis located in the first axial direction (z), the winding needle (34) being fixed on the winding rod (32) in a program-controlled continuous manner and pivotable at any arbitrary angular position within a predetermined maximum pivoting range about a third axial direction (y) at right angles to the first and second axial direction (z, x),
wherein a wire clamping and cutting device (90) which is displaceable in the first and second axial directions (z, x) and can be rotated radially about the third axial direction (y) is assigned to the winding needle (34), the method being **characterized in that** a beginning of a wire (36) is fixed in the wire clamping and cutting device (90), the stator (10) is turned into an application position, the winding needle (34) pivots into such an angular position that the wire (36) is rotated into a groove (26) of the end disc (20) by the rotation of the stator (10) and is fastened to the provided terminal (28), the winding needle (34) is pivoted into the application position and the winding rod (32) is moved into the center of the stator (10) and the coils of the stator (10) are wound, the winding needle (34) is moved radially outwards to a terminal (28) after the winding of the coils of the stator (10), the wire (36) is moved into a groove (26) of the end disk (20) and fastened and is fastened to the provided terminal (28), and the wire (36) is gripped by the wire clamping and cutting device (90) and is cut off at the terminal (28).

## Revendications

1. Dispositif pour enrouler automatiquement des bobines dans des fentes (16) d'un stator (10) d'une machine électrique et pour fixer les extrémités de bobine au bornes du côté frontal (28), avec une tige d'enroulement (32) qui peut être déplacée dans une première direction axiale (z) en direction axiale et dans une seconde direction axiale (x) perpendiculaire à la première direction axiale (z), avec une aiguille d'enroulement (34) s'étendant en travers d'une extrémité libre de la tige d'enroulement (32) dans un plan défini par la première et la deuxième direction axiale (z, x) et avec un dispositif de commutation (58) qui peut être connecté avec un stator (10) à être enroulé, pour un mouvement de rotation autour d'une axe de rotation se trouvant dans la premier direction axiale (z), où l'aiguille d'enroulement (34) à la barre d'enroulement (32) est connectée pour effectuer un mouvement de pivotement autour d'une troisième direction axiale (y), qui est perpendiculaire à la première et deuxième direction axiale (z, x), dans une position angulaire quelconque dans une plage de pivotement maximale prédéterminée commandée par programmation variable en continu, caractérisé en ce l'aiguille d'enroulement (34) est connectée, pour effectuer son mouvement de pivotement, avec la tige de commande (76) qui peut être déplacée dans sa direction longitudinale (z) sur la tige d'enroulement (32) par un entrainement à broche filetée qui est programmé et ajustable en continu.

2. Dispositif selon la revendication 1, **caractérisé en ce que** l'aiguille d'enroulement (34) est montée de façon pivotante par au moins 90 degrés entre la première direction axiale (z) et la deuxième direction axiale (x).

3. Dispositif selon la revendication 1 ou 2, **caractérisé en ce que** la tige de commande (76) est relié par un servomoteur commandé par programme et ajustable en continu avec une broche filetée.

4. Dispositif selon l'une quelconque des revendications 1 à 3, **caractérisé en ce que** la tige de commande (76) est montée à l'intérieur de la barre d'enroulement (32) et peut être déplacée coaxialement à celle-ci et de façon coulissante dans l'axe longitudinal (z).

5. Dispositif selon l'une quelconque des revendications 1 à 4, **caractérisé en ce que** l'aiguille d'enroulement (34) est connecté avec la tige de commande (76) par l'intermédiaire d'une articulation à levier (74).

6. Dispositif selon la revendication 5, **caractérisé en ce que** la tige de commande (76) est formée par une vis à billes (110) qui est connectée par un raccord (122) avec un axe à polygone (118), où, pour l'exécution du mouvement de rotation de la vis à billes (110), une roue dentée à polygone (120) qui est positionnée sur l'axe à polygone (118), peut être actionnée au moyen d'un entrainement programmable (114) par une courroie crantée.

7. Dispositif selon l'une quelconque des revendications 1 à 6, **caractérisé en ce que** le dispositif de commutation (58) est connecté pendant le processus d'enroulement avec un dispositif de tension (60) destiné au stator (10) qui est à enrouler.

8. Dispositif selon l'une quelconque des revendications 1 à 7, **caractérisé en ce que** l'aiguille d'enroulement (34) est associée à un dispositif de coupe et de serrage de fil (90) qui peut être déplacé dans la première et la deuxième direction axiale (x, z) et tourné radialement autour de la troisième direction axiale (y).

9. Dispositif selon l'une quelconque des revendications 1 à 8, **caractérisé en ce que**, pour enrouler simultanément des bobines de plusieurs stators (10), une pluralité de barres d'enroulement (32) sont associées chacune avec une aiguille d'enroulement (34) et peuvent être déplacées de manière synchrone.

10. Procédé pour enrouler automatiquement des bobines dans les fentes (16) d'un stator (10) d'une machine électrique et pour fixer des extrémités de bobine au bornes du côté frontal (28) avec un dispositif pour enrouler automatiquement des bobines dans des fentes (16) d'un stator (10) d'une machine électrique et pour fixer les extrémités de bobine au bornes du côté frontal (28), avec une tige d'enroulement (32) qui peut être déplacée dans une première direction axiale (z) en direction axiale et dans une seconde direction axiale (x) perpendiculaire à la première direction axiale (z), avec une aiguille d'enroulement (34) s'étendant en travers d'une extrémité libre de la tige d'enroulement (32) dans un plan défini par la première et la deuxième direction axiale (z, x) et avec un dispositif de commutation (58) qui peut être connecté avec un stator (10) à être enroulé, pour un mouvement de rotation autour d'une axe de rotation se trouvant dans la premier direction axiale (z), où l'aiguille d'enroulement (34) à la barre d'enroulement (32) est connectée pour effectuer un mouvement de pivotement autour d'une troisième direction axiale (y), qui est perpendiculaire à la première et deuxième direction axiale (z, x), dans une position angulaire quelconque dans une plage de pivotement maximale prédéterminée commandée par programmation variable en continu,
où l'aiguille d'enroulement (34) est associée au dispositif de serrage de fil et de coupe (90) qui peut être déplacé dans la première et la deuxième direction axiale (z, x) et tourné radialement autour de la troisième direction axiale (y), où le procédé est **caractérisé en ce qu'**un début de fil (36) est fixé dans le dispositif de serrage de fil et de coupe (90), **en ce que** le stator (10) est tourné dans une position d'atterrissage, **en ce que** l'aiguille d'enroulement (34) est pivotée dans une position angulaire telle que le fil (36) est déplacé, en faisant tourner le stator (10), dans une rainure (26) de la plaque d'extrémité (20) et est fixé à la borne désignée (28), **en ce que** l'aiguille d'enroulement (34) est pivotée dans la position d'enroulement et **en ce que** la tige d'enroulement (32) est entraînée vers le centre du stator (10) et **en ce que** les bobines du stator (10) sont enroulées, **en ce que** l'aiguille d'enroulement (32) est déplacée radialement vers l'extérieur pour appliquer une position d'atterrissage à une borne (28) après l'enroulement des bobines du stator (10), **en ce que** le fil (36) est déplacé, en faisant tourner le stator (10), dans une rainure (26) de la plaque d'extrémité (20) et est fixé à la borne désignée (28), et **en ce que** le fil (36) est détecté par le dispositif de serrage de fil et de coupe (90), est serré et est coupé auprès de la borne (28).
